# EUROPEAN PATENT APPLICATION

(11) **EP 2 397 195 A2**
(43) Date of publication of application: **21.12.2011**
(21) Application number: 11170070.4
(22) Date of filing: 15.06.2011
(51) Int. Cl.: A63B 21/075, F16B 2/18

(54) **A dumbbell plates fastener**

(30) Priority: 17.06.2010 GB 1010116
(71) Applicant: Roe, Ohad, 47201 Ramat HaSharon (IL)
(72) Inventor: Roe, Ohad, 47201 Ramat HaSharon (IL); Gafni, Izhar, 38857 Kibbutz Hamahapil (IL); Chen-Tov, Sarel, 52561 Ramat-Gan (IL); Shenkman, Louis, 44356 Kfar Saba (IL)
(74) Representative: Jones, Keith William

(57) **Abstract**

A dumbbell plates fastener comprising rotatable rods within handle cavities that are rotated to a position protruding from the handle circumference to fixate thereby the dumbbell plates from within, by externally rotating a planetary gear proximal to the dumbbell plates.

## Description

### BACKGROUND

### 1. TECHNICAL FIELD

The present invention relates to weightlifting equipment and more particularly, to a dumbbell plates fastener.

### 2. DISCUSSION OF THE RELATED ART

Various device were suggested for fastening dumbbell plates on a bar, for example WIPO Publication No. WO03105965 disclosing a mechanical lock, U.S. Patent No. 6875161 disclosing a threaded connector, and U.S. Patent No. 708700 disclosing protruding teeth. However, these solution are not satisfactory regarding the ease and safety of operation.

### BRIEF SUMMARY

One aspect of the invention provides a dumbbell plates fastener having a central cavity to accommodate a bar going therethrough, comprising: (i) an annular activation mechanism comprising an outer gear, (ii) a handle comprising: (a) a stopper attached distally to the annular activation mechanism and having a specified number of bores surrounding the central cavity, (b) a tube distally attached to the stopper, and having the specified number of sectorial cavities, each continuous with a corresponding one of the bores , the tube having a circumference selected to leave a specified gap from an inner diameter of a dumbbell plate, and (c) a distal end piece connected distally to the tube, and having the specified number of bores, each continuous with a corresponding one of the sectorial cavities; and (iii) the specified number of rods having an asymmetric cross section, each inserted through a corresponding sequence of bores and sectorial cavity and rotatably connected to the end piece and further rotatably associated with the annular activation mechanism by an inner gear attached to each rod and forming with the outer gear a planetary gear, wherein the rods are arranged to rotate, upon rotation of the planetary gear, from an inactive position, in which the rods are within the circumference of the tube, to an active position in which the rods protrude from the circumference of the tube, to close the gap from the inner diameter of the dumbbell plates, and further to exert a fixating force on the inner diameter of the dumbbell plates mounted upon the dumbbell plates fastener.

### BRIEF DESCRIPTION OF THE DRAWINGS

For a better understanding of embodiments of the invention and to show how the same may be carried into effect, reference will now be made, purely by way of example, to the accompanying drawings in which like numerals designate corresponding elements or sections throughout.

In the accompanying drawings:
**Figures 1A** and **1B** are schematic illustrations of a dumbbell plates fastener, according to some embodiments of the invention,
**Figures 2A** and **2B** are longitudinal cross sectional illustrations of the dumbbell plates fastener and its constituents, according to some embodiments of the invention,
**Figures 3A-3I** are schematic illustrations of the constituents of the dumbbell plates fastener, according to some embodiments of the invention,
**Figure 4** is a schematic illustration of a planetary gear of an annular activation mechanism of the dumbbell plates fastener, according to some embodiments of the invention, and
**Figure 5** is a schematic flowchart of a method of fastening dumbbell plates to a bar, according to some embodiments of the invention.

The drawings together with the following detailed description make apparent to those skilled in the art how the invention may be embodied in practice.

### DETAILED DESCRIPTION

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

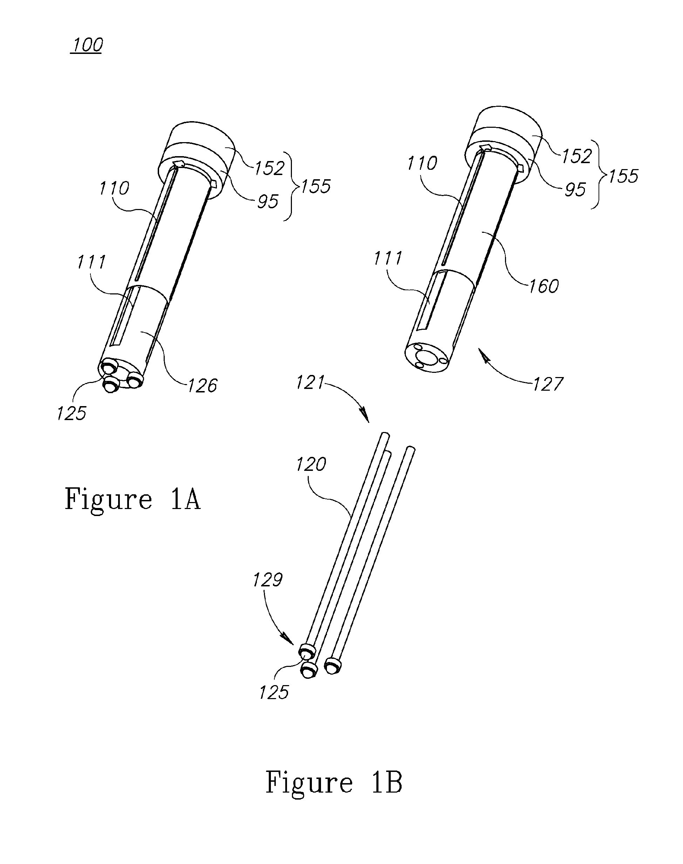

**Figures 1A** and **1B** are schematic illustrations of a dumbbell plates fastener 100, according to some embodiments of the invention. **Figures 1A** is a perspective view, **Figure 1B** is an exploded view.

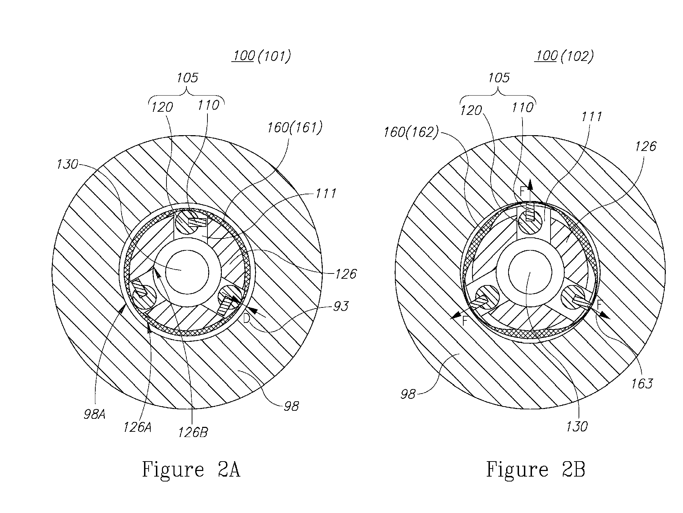

**Figures 2A** and **2B** are longitudinal cross sectional illustrations of dumbbell plates fastener **100** and its constituents, according to some embodiments of the invention. **Figure 2A** illustrates an inactive position **101** of dumbbell plates fastener **100** for mounting and releasing dumbbell plates **98** while **Figures 2B** illustrates an active position **102** of dumbbell plates fastener **100,** according to some embodiments of the invention.

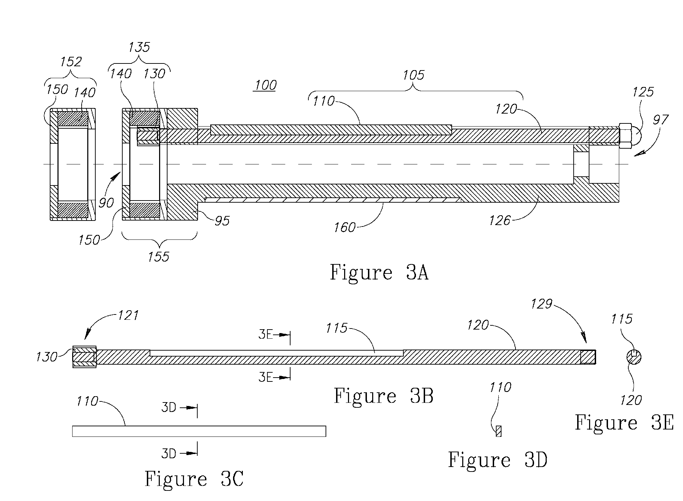

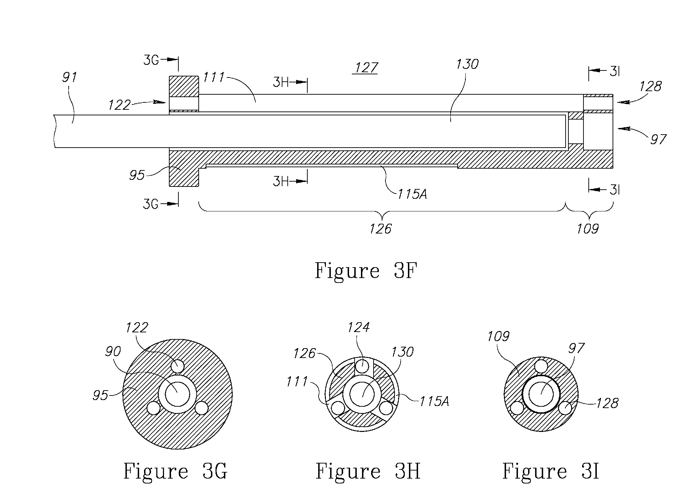

**Figures 3A-3I** are schematic illustrations of the constituents of dumbbell plates fastener **100,** according to some embodiments of the invention. **Figure 3A** is a cross section of dumbbell plates fastener **100,** **Figures 3B-3E** illustrate rod **105** in its two part configuration in longitudinal and transverse cross sections (**Figures 3B, 3C** and **Figures 3E, 3D****,** respectively). **Figures 3F-3I** illustrates handle **127** in longitudinal and transverse cross sections (**Figure 3F** and **Figures 3G****-3I,** respectively).

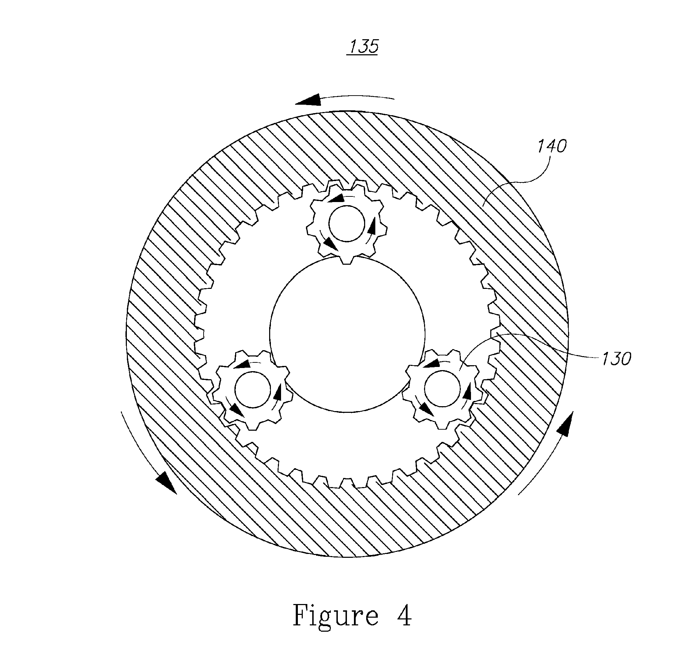

**Figure 4** is a schematic illustration of planetary gear **135** of annular activation mechanism 152, according to some embodiments of the invention.

Dumbbell plates fastener **100** has a central cavity **90** to accommodate a bar **91** (Figure 3F) going therethrough, and is used to mount, fixate and allow release of dumbbell plates **98** thereupon. Indicated positions along dumbbell plates fastener **100** are denoted as proximal (close to) and distal (far from) in relation to the person who lifts bar **91.** The term "dumbbell" relates in this application to any weightlifting equipment comprising a bar and weight plates, i.e. including e.g. barbells.

Dumbbell plates fastener **100** an annular activation mechanism **152,** a handle **127** (comprising a proximal stopper **95,** a tube **126** and a distal end piece **109 -** **Figure 3F**) and one or more rods **105** that are placed in sectorial cavities **111** in tube **126** (i.e. cavities in sectors of tubes **126's** cross section, as in Figure **3H****)** and are rotated to protrude from a circumference **126A** of tube **126,** contact an inner diameter **98A** of dumbbell plates **98** and exert a fixating force (marked F in **Figure 2B**) 163 on dumbbell plates **98** (**Figures 2A, 2B**).

Annular activation mechanism **152** comprises an outer gear **140** of a planetary gear **135,** with inner gears **130** connected to proximal ends **121** of rods **105** (**Figures 1B****,** **3A****,** and **Figure 4**). Rotating annular activation mechanism **152** externally, causes internal rotation of rods **105.**

Stopper **95** is attached distally to annular activation mechanism **152** and has a specified number of bores **122** surrounding central cavity **90** (**Figures 3A** and **3G**). The specified number of rods **105** is illustrated as three in the drawings but is not limited to three. Any number of rods **105** may be used, starting from one or two and possibly reaching six or more, according to a specific mechanical planning. Stopper **95** and annular activation mechanism **152** may be integrated into a single proximal end piece **155** (**Figure 1A, 1B**).

Tube **126** has an inner circumference **126B** that allows bar **91** go through inner cavity **130** (**Figures 3F-3I****,** through proximal cavity **90** going through stopper **95** and annular activation mechanism **152).** Tube **126** has outer circumference **126A** that leaves a specified small gap (marked D in **Figure 2A**) **93** from inner diameter **98A** of dumbbell plates **98.** Gap **93** may be one to several millimeters wide, depending on the cross sectional profile of rods **105,** the length of the projection of rods **105** from circumference **126A** of tube **126,** and the behavior of an elastic cover **160** placed upon rods **105** (**Figure 2B** and see below).

Tube **126** is distally attached to stopper **95** (**Figure 3F**), and both, together with distal end piece **109** may be a single solid member. Tube **126** has the specified number of sectorial cavities **111** along it, each sectorial cavities **111** being continuous with a corresponding one of bores **122** in stopper **95** (**Figures 1B****,** **3A****3F-3I**). Sectorial cavities **111** may go radially through tube **126** and separate tube **126** into discrete rays that are connected only to stopper **95** and end piece **109.** Alternatively, sectorial cavities **111** may go radially through tube **126** only in a part of the tube's length, or rods **105** may be positioned within long bores in tube **126,** leaving the inner circumference **126B** of tube **126** intact. Distal end piece **109** is connected distally to tube **126,** and has the specified number of bores **128,** each continuous with the corresponding sectorial cavity **111.** Rods **105** are rotatably attached at their distal ends **129** to end piece **109,** e.g. by partly tight nuts **125** (**Figures 1A, 1B**).

Rods **105** have an asymmetric cross section (**Figures 3B-3E**), for example each rod **105** may comprise a round holder rod **120 (****Figure 3B****)** having a slit **115** and an oblong insert **110** (**Figure 3C**) fitting into the slit **115** (**Figure 3A**) and producing the asymmetric cross section of the rod **105.** Alternatively, rods **105** may be casted or extruded as a single member with an asymmetric cross section such an oblong cross section having a long axis.

Each rod **105** is inserted through a corresponding sequence of bores **122, 128** and sectorial cavity **111** and is rotatably connected to end piece **109** and further rotatably associated with annular activation mechanism **152** by inner gear **130** attached to each rod **105** and forming with outer gear **140** a planetary gear **135** (**Figures 1A, 1B****,** **3A** and **4**).

Rods **105** are arranged to rotate, upon rotation of planetary gear **135,** from an inactive position **101** (**Figure 2A**), in which rods **105** are within circumference **126A** of tube **126,** to an active position **102** (**Figure 2B**) in which rods **105** protrude from circumference **126A** of the tube **126,** to close gap **93** from inner diameter **98A** of dumbbell plates **98,** and further to exert fixating force **163** on inner diameter **98A** of dumbbell plates **98** mounted upon dumbbell plates fastener **100.**

Dumbbell plates fastener **100** may further comprise elastic cover **160** covering at least a part of circumference **126A** of tube **126** and arranged to enhance applied force **163** on inner diameter (**98A**) of dumbbell plates (**98**). Elastic cover **160** deforms between inactive position **101,** in which it may be essentially a flat cover (**161**), and active position **102,** in which it may deform (**162**) to increase a contact area of dumbbell plates fastener **100** with dumbbell plates **98** and increase the frictional coefficient therebetween. Some of circumference **126A** of tube **126** may be left free for elastic cover **160** to deform **(162)** in non contacting areas (**Figure 2B**).

Dumbbell plates fastener **100** may further comprise a locking member (not shown in the drawings) for distally fastening dumbbell plates **98** to bar **91.** The locking member may fixate planetary gear **135** or annular activation mechanism **152** in place, for safe use of the dumbbell, preventing accidental release of dumbbell plates **98** from bar **91.**

Dumbbell plates fastener **100** may further comprise a controllable motor (not shown in the drawings) arranged to rotate outer gear **140** upon activation, to enhance inner fixating force **163** exerted on dumbbell plates (**98**). For example, the controllable motor may be associated with annular activation mechanism **152** and rotate it upon activation by a user.

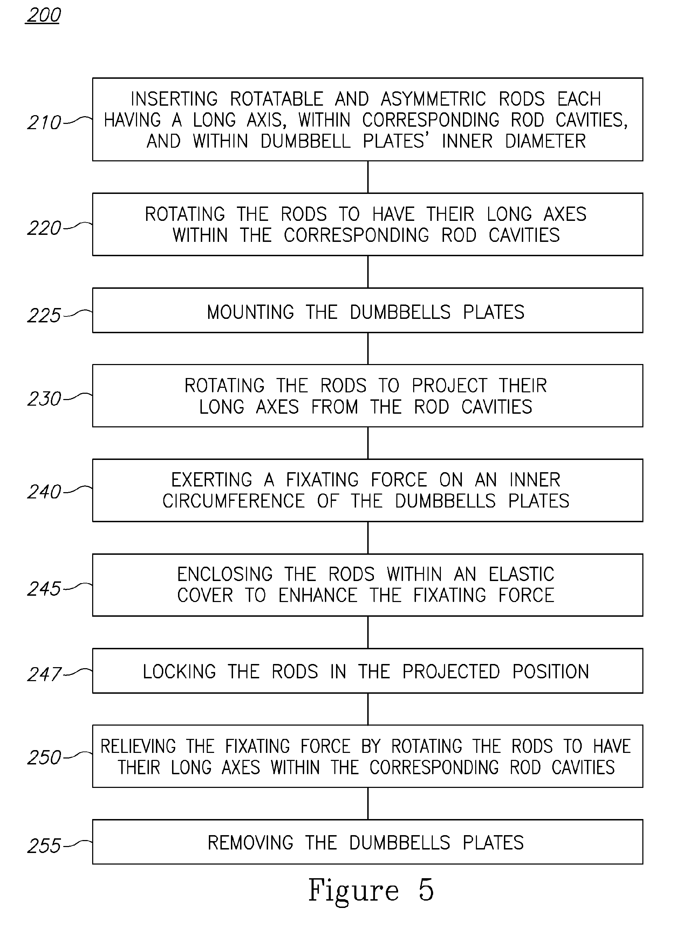

**Figure 5** is a schematic flowchart of a method **200** of fastening dumbbell plates to a bar, according to some embodiments of the invention.

Method **200** comprises the following stages: inserting, within an inner diameter of the dumbbell plates and attached to the bar, one or more rotatable and asymmetric rods having a long axis within corresponding rod cavities (stage **210**), rotating the rods to have their long axes within the corresponding rod cavities to enable mounting the dumbbell plates (stage **220**), and rotating the rods to project their long axes from the corresponding rod cavities (stage **230**) to increase the circumference of the rod system to exert a fixating force on an inner circumference of the dumbbell plates (stage **240**).

Method **200** may further comprise enclosing the rods within an elastic cover to enhance the fixating force (stage **245**).

Method **200** may further comprise locking the rods in their projected position (stage **247**), as well as rotating the rods by a motor (stage **234**), for example by a motor rotating an outer gear that coordinates the rotation of the rods (stage **232**) having inner gears to interact with the outer gear, building together a planetary gear.

In embodiments, method **200** may employ three rods to stabilize the dumbbell plates on the bar. The method may also construct the asymmetric rods from two or more parts that are easier to produce.

In the above description, an embodiment is an example or implementation of the invention. The various appearances of "one embodiment", "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Furthermore, it is to be understood that the invention can be carried out or practiced in various ways and that the invention can be implemented in embodiments other than the ones outlined in the description above.

The invention is not limited to those diagrams or to the corresponding descriptions. For example, flow need not move through each illustrated box or state, or in exactly the same order as illustrated and described.

Meanings of technical and scientific terms used herein are to be commonly understood as by one of ordinary skill in the art to which the invention belongs, unless otherwise defined.

While the invention has been described with respect to a limited number of embodiments, these should not be construed as limitations on the scope of the invention, but rather as exemplifications of some of the preferred embodiments. Other possible variations, modifications, and applications are also within the scope of the invention.

## Claims

1. A dumbbell plates fastener (100) having a central cavity (90) to accommodate a bar (91) going therethrough, comprising:
an annular activation mechanism (152) comprising an outer gear (140),
a handle (127) comprising:
a stopper (95) attached distally to the annular activation mechanism (152) and having a specified number of bores (122) surrounding the central cavity (90),
a tube (126) distally attached to the stopper (95), and having the specified number of sectorial cavities (111), each continuous with a corresponding one of the bores (122), the tube having a circumference (126A)selected to leave a specified gap (93) from an inner diameter (98A) of a dumbbell plate (98), and
a distal end piece (109) connected distally to the tube (126), and having the specified number of bores (128), each continuous with a corresponding one of the sectorial cavities (111); and
the specified number of rods (105) having an asymmetric cross section, each inserted through a corresponding sequence of bores (122, 128) and sectorial cavity (111) and rotatably connected to the end piece and further rotatably associated with the annular activation mechanism (152) by an inner gear (130) attached to each rod (105) and forming with the outer gear (140) a planetary gear (135), wherein the rods (105) are arranged to rotate, upon rotation of the planetary gear (135), from an inactive position (101), in which the rods (105) are within the circumference (126A) of the tube (126), to an active position (102) in which the rods (105) protrude from the circumference (126A) of the tube (126), to close the gap (93) from the inner diameter (98A) of the dumbbell plates (98), and further to exert a fixating force (163) on the inner diameter (98A) of the dumbbell plates (98) mounted upon the dumbbell plates fastener (100).

2. The dumbbell plates fastener (100) according to claim 1, further comprising an elastic cover (160) covering at least a part of the circumference (126A) of the tube (126) and arranged to enhance the applied force on the inner diameter (98A) of the dumbbell plates (98).

3. The dumbbell plates fastener (100) according to claim 1, wherein each rod (105) comprises a round holder rod (120) having a slit (115) and an oblong insert (110) fitting into the slit (115) and producing the asymmetric cross section of the rod (105).

4. The dumbbell plates fastener (100) according to claim 1, further comprising a locking member for distally fastening the dumbbell plates (98) to the bar (91).

5. The dumbbell plates fastener (100) according to claim 1, wherein the specified number is three.

6. The dumbbell plates fastener (100) according to claim 1, further comprising a controllable motor arranged to rotate the outer gear (140) upon activation, to enhance the inner fixating force exerted on the dumbbell plates.

7. A method of fastening dumbbell plates to a bar comprising:
inserting (210), within an inner diameter of the dumbbell plates and attached to the bar, at least one rotatable and asymmetric rod having a long axis within at least one corresponding rod cavity,
rotating (220) the at least one rod to have its long axis within the corresponding rod cavity to enable mounting the dumbbell plates, and
rotating (230) the at least one rod to project its long axis from the corresponding rod cavity to exert (240) a fixating force on an inner circumference of the dumbbell plates.

8. The method of claim 7, further comprising enclosing the at least one rod within an elastic cover to enhance the fixating force (245).

9. The method of claim 7, further comprising locking the at least one rod in a projected position thereof (247).

10. The method of claim 7, wherein the at least one rod comprises at least three rods, each with an inner gear, and further comprising coordinating the rotation of the rods by an outer gear (232) that rotates the inner gears.

11. The method of claim 10, further comprising rotating the outer gear by a motor (234).
